# EUROPÄISCHE PATENTSCHRIFT

(11) **EP 2 984 503 B1**
(45) Veröffentlichungstag und Bekanntmachung des Hinweises auf die Patenterteilung: **08.08.2018**
(21) Anmeldenummer: 14715304.3
(22) Anmeldetag: 04.04.2014
(51) Int. Cl.: G01S 15/93

(54) **VERFAHREN ZUR MESSUNG MITTELS ULTRASCHALL, INSBESONDERE ALS PARKHILFE FÜR FAHRZEUGE, UND ULTRASCHALLMESSSYSTEME**
METHOD FOR MEASUREMENT BY MEANS OF ULTRASOUND, IN PARTICULAR AS A PARKING AID FOR VEHICLES, AND ULTRASOUND MEASURING SYSTEMS
PROCÉDÉ DE MESURE PAR ULTRASON, NOTAMMENT COMME AIDE AU STATIONNEMENT POUR VÉHICULES, ET SYSTÈMES DE MESURE PAR ULTRASON

(30) Priorität: 08.04.2013 EP 13162754
(43) Veröffentlichungstag der Anmeldung: 17.02.2016
(73) Patentinhaber: Elmos Semiconductor Aktiengesellschaft, 44227 Dortmund (DE)
(72) Erfinder: HEPPEKAUSEN, Stefanie, 44227 Dortmund (DE); SCHLAUTMANN, Guido, 44227 Dortmund (DE); SCHMIDT, André, 44227 Dortmund (DE); SPIEGEL, Egbert, 44227 Dortmund (DE); BRANDS, Robert, 44227 Dortmund (DE)
(74) Vertreter: dompatent von Kreisler Selting Werner - Partnerschaft von Patent- und Rechtsanwälten mbB
(86) Internationale Anmeldenummer: PCT/EP2014/056816
(87) Internationale Veröffentlichungsnummer: WO 2014/166835

(56) Entgegenhaltungen:
- DE-A1- 3 602 857
- DE-A1-102009 027 221
- DE-A1-102010 039 017
- US-A- 5 212 467

## Beschreibung

Die Erfindung betrifft ein Verfahren zur Messung mittels Ultraschall, insbesondere in Form einer Abstandsmessung für vorzugsweise Parkhilfen von Fahrzeugen. Ferner betrifft die Erfindung ein Ultraschallmesssystem, das sich insbesondere als Parkhilfe für Fahrzeuge eignet.

Ultraschallmesssysteme werden insbesondere für Abstands- bzw. Entfernungsmessungen eingesetzt. Ein wesentlicher Einsatzbereich solcher Ultraschallmesssysteme ist ihre Verwendung als Parkhilfe für Fahrzeuge.

Ganz allgemein gilt, dass bei Ultraschallmesssystemen von einem Ultraschallsender Ultraschallwellen ausgesendet werden, die, wenn sie auf ein Hindernis auftreffen, von diesem reflektiert und von einem Ultraschallempfänger empfangen werden. Aufgrund der Laufzeit zwischen dem Aussenden der Ultraschallwellen und dem Empfang von Echos der Ultraschallwellen kann dann auf die Entfernung des Hindernisses zum Ultraschallsender bzw. -empfänger geschlossen werden. Ultraschallmesssysteme werden aber auch zur Überwachung von Räumen und zur Detektion von sich in überwachten Räumen aufhaltenden Personen eingesetzt.

Um auch noch Echosignale, die von weiter entfernt angeordneten Objekten kommen, zuverlässig detektieren zu können, sollte die Energie der ausgesendeten Ultraschallwellen ausreichend groß sein. Daher werden elektroakustische Ultraschallwandler derartiger Ultraschallsysteme am Eingang mit einem Transformator bzw. Spannungsumsetzer betrieben. Damit aber steigen die Herstellungskosten von Ultraschallwandlern, was sich insbesondere bei Parkhilfen für Fahrzeuge insoweit negativ auswirkt, als derartige Parkhilfen zumeist mehrere Ultraschallwandler umfassen.

Ein Ultraschallmesssystem kann beispielsweise einen Ultraschallsender und einen Ultraschallempfänger aufweisen, die als getrennte Einzelkomponenten ausgebildet sind. Wesentlich vorteilhafter ist es insbesondere unter dem Aspekt eines verringerten Platzbedarfs und geringerer Gestehungskosten jedoch, wenn ein Ultraschallwandler eingesetzt wird, der in einem Sendeintervall als Ultraschallsender und in einem sich an ein Sendeintervall anschließenden Empfangsintervall als Ultraschallempfänger arbeitet. Innerhalb des Sendeintervalls wird der Ultraschallwandler insbesondere mittels eines Burst-Ansteuersignals angesteuert, wodurch ein elektroakustisches Schwingelement des Ultraschallwandlers in Schwingung versetzt und damit angeregt wird. Nach Beendigung dieser Ansteuerung schwingt das Schwingelement allerdings zunächst aus. Während dieser Zeit können Echos die von nahe am Ultraschallwandler angeordneten Objekten kommen, nicht mit Sicherheit detektiert werden, so dass mit dem zuvor genannten Typus von Ultraschallwandlern nur schwer im Nahbereich gemessen werden kann.

Es ist bekannt, zur Verkürzung der Ausschwingzeit eines Ultraschallwandlers dessen Schwingelement zu dämpfen (siehe EP-B-0 571 566, EP-B-0 623 395, WO-A-2012/163598, US-B-6 731 569 und GB-A-2 483 337). Hierzu wird bei einem Ultraschallwandler nach DE-A-36 02 857 ein Widerstand zugeschaltet, und zwar bereits innerhalb des Sendeintervalls.

Nach DE-A-10 2009 027 221 und DE-A-10 2010 039 017 wird das Schwingelement mit einem oder mehreren Dämpfungspulsen beaufschlagt.

Eine Ultraschall-Detektionsvorrichtung mit variabel einstellbarem Verstärkungsfaktor eines Messverstärkers ist aus US-A-5 212 467 bekannt.

Aufgabe der Erfindung ist es, ein Verfahren zur Ultraschallmessung sowie ein Ultraschallmesssystem zu schaffen, das kostengünstig mit nur geringem Hardware-Aufwand realisiert werden kann.

Zur Lösung dieser Aufgabe wird mit der Erfindung ein Verfahren zur Messung mittels Ultraschall, insbesondere als Parkhilfe für Fahrzeuge, vorgeschlagen, bei dem
- ein ein Schwingelement aufweisender, elektroakustischer Ultraschallwandler, der ohne Spannungsumsetzer an seinem Eingang betrieben wird, für die Dauer eines Sendeintervalls mit einem insbesondere Pulsfolge-Ansteuersignal zur Erzeugung von Ultraschallwellen angesteuert wird,
- sich an das Sendeintervall mit Beendigung der Ansteuerung des Ultraschallwandlers ein Empfangsintervall anschließt, wobei das Schwingelement des Ultraschallwandlers während einer mit Beendigung des Sendeintervalls beginnenden Ausschwingphase ausschwingt,
- der Ultraschallwandler spätestens ab Beginn der Ausschwingphase zur Verkürzung derselben mit mindestens einem Dämpfungswiderstand beschaltet wird,
- die Beschaltung des Ultraschallwandlers mit dem Dämpfungswiderstand beendet wird, wenn das Ausgangssignal des Ultraschallwandlers oder das Ausgangssignal eines mit dem Ultraschallwandler verbundenen Messverstärkers oder einer diesem nachgeordneten Schaltung eine vorgebbare Deaktivierungsschwelle unterschreitet und
- danach während des Empfangsintervalls mindestens ein Echo einer in dem vorherigen Sendeintervall ausgesendeten Ultraschallwelle oder eine andere Ultraschallwelle detektiert werden kann,
- wobei der Ultraschallwandler mit dem Dämpfungswiderstand erst mit Beendigung des Sendeintervalls und/oder mit Beginn des Empfangsintervalls beschaltet wird.

Die zuvor genannte Aufgabe wird erfindungsgemäß ferner mit einem Ultraschallmesssystem gelöst, das sich insbesondere als Parkhilfe für Fahrzeuge eignet und versehen ist mit
- einem ein Schwingelement aufweisenden, spannungsumsetzerlosen Ultraschallwandler, der wahlweise sowohl als Ultraschallsender als auch als Ultraschallempfänger betreibbar ist und mindestens einen entweder als Eingang oder als Ausgang dienenden Signalanschluss aufweist, und
- einer mit dem mindestens einen Signalanschluss des Ultraschallwandlers verbundenen Ansteuer- und Auswerteeinheit zur Anregung des Schwingelements des Ultraschallwandlers zum Aussenden von Ultraschallwellen für den Betrieb als Ultraschallsender während eines Sendeintervalls und zur anschließenden Deaktivierung der Anregung des Schwingelements des Ultraschallwandlers zum Empfangen von Ultraschallwellen für den Betrieb als Ultraschallempfänger während eines Empfangsintervalls und zur Verarbeitung von an dem mindestens einen Signalanschluss des Ultraschallwandlers anliegenden Signalen, wobei das Schwingelement nach Beendigung seiner Anregung während einer Ausschwingphase ab dem Beginn eines Empfangsintervalls ausschwingt,
- wobei die Ansteuer- und Auswerteeinheit zur Verkürzung der Ausschwingphase des Schwingelements mindestens einen schaltbaren Dämpfungswiderstand aufweist, der auf den mindestens einen Signalanschluss des Ultraschallwandlers aufschaltbar ist, und zwar durch die Ansteuer- und Auswerteeinheit gesteuert und mit Beendigung des Sendeintervalls und/oder mit Beginn des Empfangsintervalls,
- wobei die Größe des Ausgangssignals des Ultraschallwandlers oder die Größe eines Ausgangssignals eines Messverstärkers oder einer diesem nachgeordneten Schaltung der Ansteuer- und Auswerteeinheit zumindest ab Beginn der Ausschwingphase mit einer vorgebbaren Deaktivierungsschwelle verglichen wird und
- wobei die Ansteuer- und Auswerteeinheit die Aufschaltung des Dämpfungswiderstandes auf den mindestens einen Signalanschluss des Ultraschallwandlers beendet, wenn das Ausgangssignal kleiner als oder gleich der Deaktivierungsschwelle ist.

Die Erfindung geht von der Verwendung eines elektroakustischen Ultraschallwandlers aus, der ohne Spannungsumsetzer bzw. Transformator an seinem Eingang betrieben wird. Dieser Ultraschallwandler weist ein Schwingelement auf, das während eines Sendeintervalls zu Schwingungen angeregt wird, also als Aktuator dient, und damit Ultraschallwellen abgibt, und das in einem sich anschließenden Empfangsintervall auf empfangene Ultraschallwellen reagiert und angeregt wird, also als Sensor dient. Von Bedeutung bei derartigen Ultraschallwandlern ist, dass sie eine möglichst geringe Ausschwingphase aufweisen. Zur Verkürzung dieser Ausschwingphase wird nun erfindungsgemäß vorgeschlagen, den mindestens einen Signalanschluss des Ultraschallwandlers, der während eines Empfangsintervalls als Ausgang dient, mit einem Dämpfungswiderstand zu belegen bzw. zu beschalten. Der Dämpfungswiderstand sollte spätestens mit dem Beginn der Ausschwingphase aufgeschaltet werden und wird erfindungsgemäß dann "deaktiviert", wenn das Ausgangssignal des Ultraschallwandlers oder das Ausgangssignal eines mit dem Ultraschallwandler verbundenen Messverstärkers oder einer diesem nachgeordneten Schaltung eine vorgebbare Deaktivierungsschwelle unterschreitet.

Durch die phasenweise Aufschaltung eines Dämpfungswiderstandes o.dgl. Modulation eines ohmschen Widerstandes, der beispielsweise als Innenwiderstand Bestandteil der Ansteuer- und Auswerteeinheit des Ultraschallmesssystems bzw. des Ultraschallmessverfahrens ist, wird eine Verringerung der Dauer der Ausschwingphase erreicht. Damit kann das Schwingelement nach einer verkürzten Zeit ab Beendigung des Sendeintervalls als Sensor für Echos o.dgl. Ultraschallwellen eingesetzt werden, wodurch das Ultraschallmesssystem und das Ultraschallmessverfahren mit Vorteil für den Nahbereich eingesetzt werden kann.

Erfindungsgemäß wird der Ultraschallwandler mit dem Dämpfungswiderstand erst mit Beendigung des Sendeintervalls und/oder mit Beginn des Empfangsintervalls beschaltet, und zwar insbesondere durch elektrische Verbindung des Signalausgangs des Ultraschallwandlers mit Masse. Mit anderen Worten ist hierbei also vorgesehen, dass der Dämpfungswiderstand nach Unterschreitung der vorgebbaren Deaktivierungsschwelle durch das Ausgangssignal des Messverstärkers oder durch das Ausgangssignal des Ultraschallwandlers erst wieder mit Beginn der Ausschwingphase nach dem nächsten auf das Empfangsintervall folgenden Sendeintervall auf den Ultraschallwandler aufgeschaltet wird.

Diese nur zeitweise Beschaltung des Ultraschallwandlers mit dem Dämpfungswiderstand erlaubt es, den Ultraschallwandler während eines Sendeintervalls, innerhalb dessen der Dämpfungswiderstand vom Ansteuerpfad abgetrennt ist, mit maximal zur Verfügung stehender Sendeenergie zu versorgen, da jegliche Sekundärpfade vermieden werden und somit die Sendeenergie im Wesentlichen ausschließlich (nämlich mit Ausnahme von geringen potentiellen Verlusten in anderen Bauteilen der Beschaltung oder Ultraschallwandler) dem Schwingelement zur Verfügung steht.

Es sei an dieser Stelle hervorgehoben, dass mit "Dämpfungswiderstand" im Sinne der Erfindung ganz allgemein ein Bauteil mit einem elektrischen (Widerstands-)Leiter oder einem elektrisch leitenden (Widerstands-)Leitungspfad gemeint ist, die beide einen ohmschen Widerstand bilden. Zum Beispiel kann der Dämpfungswiderstand ein elektrisches Widerstandsbauteil oder aber ein elektronisches Bauteil mit einem durch ein Steuersignal steuerbaren Leitungspfad mit veränderlichem ohmschen Widerstand sein, wie es z.B. bei einem Transistor der Fall ist. Dadurch, dass die Beschaltung des Ausgangs des Ultraschallwandlers mit einem ohmschen Widerstand erfindungsgemäß aktiviert und deaktiviert werden kann, ist der ohmsche Widerstand insoweit modulierbar. Diese Widerstandsmodulation ist insoweit ein Aspekt der Erfindung. Ein Transistor oder ein anderes elektronisches Bauteil, das durch ein Steuersignal einem (im Idealfall zwischen 0 und ∞) einstellbaren ohmschen Widerstand bildet, eignet sich insoweit, als die Aktivierung und die Deaktivierung der Beschaltung des Ultraschallwandlers durch den Dämpfungswiderstand schaltungstechnisch durch ein und dasselbe elektrische Bauteil realisiert werden kann, indem der Transistor bzw. das elektronische Bauteil angesteuert wird.

Wie bereits oben erwähnt, kann der Dämpfungswiderstand als zusätzliches bzw. elektronisches Bauelement ausgeführt sein. Sollte für die Ansteuerung des Ultraschallwandlers zur Erzeugung von Ultraschallwellen eine Schaltung verwendet werden, die über einen (nennenswerten) Innenwiderstand verfügt (,wie dies beispielsweise bei der Verwendung von Stromquellen der Fall sein könnte,) so ist es denkbar und im Rahmen der Erfindung, die Aktivierung und Deaktivierung der Beschaltung des Ultraschallwandlers mit dem Dämpfungswiderstand durch Modulation des Innenwiderstandes der Ansteuerschaltung zu realisieren.

Alternativ oder zusätzlich zur phasenweisen Beschaltung des Ultraschallwandlers mit einem Dämpfungswiderstand bzw. der phasenweisen Modulation eines Dämpfungswiderstandes am Ausgang des Ultraschallwandlers kann gemäß einem selbstständigen Erfindungsaspekt vorgesehen sein, dass zur weiteren Verkürzung der Ausschwingphase anhand des Ausgangssignals des Ultraschallwandlers und/oder des Ausgangssignals des Messverstärkers die Phasenlage der Perioden des Ausschwingens des Schwingelements des Ultraschallwandlers ermittelt oder zumindest abgeschätzt wird und dass der Ultraschallwandler mit mindestens einem zum Ausgangssignal des Ultraschallwandlers phasenverschobenen, insbesondere Einzel-, Doppel- oder Mehrfach-Dämpfungspuls beaufschlagt wird. Die Ansteuer- und Auswerteeinheit erzeugt dabei zur weiteren Verkürzung der Ausschwingphase zumindest einen Dämpfungspuls, mit dem der mindestens eine Signalanschluss des Ultraschallwandlers während einer Ausschwingphase beaufschlagbar ist, wobei anhand eines Phasenlagendetektors der Ansteuer- und Auswerteeinheit die Phasenlage der Schwingungen des Ausschwingsignals des Ultraschallwandlers während einer Ausschwingphase ermittelbar und anhand dessen die Phasenlage des Ausschwingens des Schwingelements des Ultraschallwandlers abschätzbar ist, wobei der Ultraschallwandler mit einem zum Ausschwingsignal des Ultraschallwandlers phasenverschobenen, insbesondere Einzel-, Doppel- oder Mehrfach-Dämpfungspuls ansteuerbar ist.

Bei dieser Variante der Erfindung wird also das ausschwingende Schwingelement durch gezielt gesetzte Dämpfungspulse "abgebremst", wobei durch die erfindungsgemäße Vorgehensweise darauf geachtet wird, dass die Dämpfungspulse im Idealfall um 180 Grad phasenverschoben zum Ausschwingen des Schwingelements gesetzt werden. Problematisch ist allerdings, dass an einem handelsüblichen Ultraschallwandler leider nicht der Strom, der das Schwingelement anregt, bzw. die Spannung über dem Schwingelement abgegriffen werden kann. Vielmehr kann lediglich das Ausgangssignal des Ultraschallwandlers untersucht werden. Dieses Ausgangssignal ist aber bezüglich seiner Phase gegenüber der Phase des Strom durch das Schwingelement bzw. der Spannung über dem Schwingelement verschoben. Aufgrund der Werte für die Kapazität, den ohmschen Widerstand und die Induktivität des elektrischen Ersatzschaltbildes des Ultraschallwandlers, dessen Mechanik (und Beschaltung) durch das elektrische Ersatzschaltbild repräsentiert wird, kann aber anhand der Phasenlage des Ausgangssignals des Ultraschallwandlers ermittelt oder zumindest abgeschätzt werden, welche Phasenlage das Schwingelement aufweist. Dementsprechend kann dann ein Dämpfungspuls also, wie für ein wirkungsvolles Abbremsen des Schwingelements erforderlich, auf die Phasenlage abgestimmt gesetzt werden. Der Dämpfungsimpuls kann dabei als Einzelpuls oder als Mehrfachpuls gesendet werden, wobei die Energie pro Dämpfungspuls variabel sein kann, was durch die Amplitude (Höhe) und die Dauer des Dämpfungspulses steuerbar ist.

In zweckmäßiger Weiterbildung der zuvor beschriebenen Variante der Erfindung kann vorgesehen sein, dass nach der Beaufschlagung des Ultraschallwandlers durch einen ersten, insbesondere Einzel-, Doppel- oder Mehrfach-Dämpfungspuls zunächst wiederum die Phasenlage der Perioden des gedämpften Ausschwingens des Schwingelements des Ultraschallwandlers ermittelt oder zumindest abgeschätzt wird und dass der Ultraschallwandler mit einem weiteren zum Ausganssignal des Ultraschallwandlers phasenverschobenen, insbesondere Einzel-, Doppel- oder Mehrfach-Dämpfungspuls beaufschlagt wird. Bei dem erfindungsgemäßen Ultraschallmesssystem gemäß diesem Aspekt der Erfindung ist also nach einer Ansteuerung des Ultraschallwandlers durch einen Einzel-, Doppel- oder Mehrfach-Dämpfungspuls mittels des Phasenlagendetektors die Phasenlage der Schwingungen des gedämpften Ausschwingsignals des Ultraschallwandlers ermittelbar und anhand dessen die Phasenlage des gedämpften Ausschwingens des Schwingelements des Ultraschallwandlers abschätzbar, wobei der Ultraschallwandler durch zumindest einen weiteren zum Ausschwingsignal des Ultraschallwandlers phasenverschobenen, insbesondere Einzel-, Doppel- oder Mehrfach-Dämpfungspuls ansteuerbar ist.

Die Anzahl an Dämpfungspulsen hängt letztendlich von der Güte des Ultraschallwandlers ab. Je höher dessen Güte ist, umso mehr Dämpfungspulse können gesetzt werden, um das Schwingelement abzubremsen. Grundsätzlich gilt für die Dämpfungspulse, dass diese nicht dazu führen sollten, dass Schwingelement aktiv anzuregen; dann hätten sie ihren Zweck verfehlt.

Die Dauer des Einzel-Dämpfungspulses bzw. jedes Dämpfungspulses eines Doppel- oder Mehrfachpulses ist dabei gleich der Hälfte der Periodendauer der fest eingestellten Anregungsschwingung, die von der Anregungsfrequenz abhängig ist, mit der der Ultraschallwandler während des Sendeintervalls betrieben wird. Das Schwingelement gleicht sich automatisch mit Beginn der Ausschwingphase (also ab Ende des Sendeintervalls und mit Beginn des Empfangsintervalls) auf seine Eigenfrequenz ab. Die Anregungsfrequenz sollte im Idealfall gleich der Eigenfrequenz sein, was aber wegen fertigungsbedingter Toleranzen des Schwingelements, bei dem es sich typischerweise um ein Piezokristall handelt, nicht gewährleistet werden kann. Im Regelfall unterscheidet sich die Eigenfrequenz von der Anregungsfrequenz (wenn auch geringfügig), so dass die Dauer eines bzw. jedes Dämpfungspulses kürzer oder länger als die Hälfte der Periodendauer der Eigenschwingung des Schwingelements ist. Diese Ungenauigkeit wird aus Gründen der Vereinfachung der Erzeugung der Dämpfungspulse (fest vorgegebene Dauer jedes Dämpfungspulses und damit keine Ermittlung der Periodendauer der Eigenschwingung des Schwingelements in der Ausschwingphase erforderlich, um die Dauer des Dämpfungspulses zu ermitteln) bei dieser Weiterbildung der Erfindung bewusst in Kauf genommen.

Alternativ zu den beiden zuvor beschriebenen selbstständigen Varianten der Erfindung oder aber auch in Ergänzung zu zumindest einer dieser Varianten und vorzugsweise in Ergänzung zu beiden Varianten kann ferner vorgesehen sein, dass das vom Ultraschallwandler während einer Empfangsphase empfangene akustische Signal in ein elektrisches Messsignal umgesetzt wird, das dem Messverstärker als Eingangssignal zugeführt und in dem Messverstärker verstärkt wird, und dass das Eingangssignal des Messverstärkers auf einen den Arbeitspunkt des Messverstärkers definierenden Wert begrenzt wird, der kleiner ist als das Messsignal des Ultraschallwandlers zu Beginn der Ausschwingphase. Dabei ist bei dem erfindungsgemäßen Ultraschallmesssystem beispielhaft vorgesehen, dass zwischen dem Ultraschallwandler und dem Messverstärker mindestens ein Entkopplungskondensator angeordnet ist und dass die Ansteuer- und Auswerteeinheit eine Spannungsbegrenzungseinheit wie z.B. zwei antiparallel geschaltete Spannungsbegrenzungselemente, insbesondere mit pn-Übergängen aufweist, mit denen, von der Ansteuer- und Auswerteeinheit, eine Spannungsbegrenzungseinheit gesteuert, von Beginn eines Empfangsintervalls an der mindestens eine als Ausgang wirkende Signalanschluss des Ultraschallwandlers und damit der Eingang des potentiell vorhandenen Messverstärkers beschaltbar ist. Durch die Arbeitspunktbeeinflussung des Messverstärkers während der Ausschwingphase wird der Messverstärker also sozusagen zur Verstärkung eines direkt nach Beendigung des Ausschwingens empfangenen Echosignals vorbereitet, so dass dieses Echosignal dann auch, wie gewünscht, verstärkt wird, ohne dass der Ausgang des Messverstärkers übersteuert. Schaltungstechnisch lässt sich dies beispielsweise mit einer Spannungsbegrenzungseinheit, insbesondere mit zwei antiparallel geschalteten Dioden o.dgl. Halbleiterbauelementen mit pn-Übergängen realisieren. Eine derartige Spannungsbegrenzungseinheit, mit der der Ausgang des Ultraschallwandlers während der Ausschwingphase beschaltet wird, ist insbesondere bei Verwendung von kapazitiven Entkopplungsbauteilen zwischen dem Ultraschallwandler und dem Messverstärker von Vorteil. Derartige Entkopplungskondensatoren dienen dazu, dass während der Sendephase die Ansteuersignale für den Ultraschallwandler (im Regelfall Burst- oder Pulsfolge-Signale) abgemildert am Eingang des Messverstärkers anliegt. Der Vorteil von Entkopplungskondensatoren ist, dass diese kein zusätzliches Signalrauschen erzeugen und die gemessenen Ausgangsignale des Ultraschallwandlers also nicht verfälschen. Nachteil von Entkopplungskondensatoren ist aber, dass diese sich aufladen und damit auch wieder entladen werden müssen. Hier hilft ebenfalls die Spannungsbegrenzungseinheit, die während der Ausschwingphase parallel zum Ausgang des Ultraschallwandlers geschaltet wird und somit die über den Entkopplungskondensatoren anstehende Spannung begrenzt. Damit spielt also die Entladung der Entkopplungskondensatoren, die für eine Abklingverzögerung des Ausgangssignals des Ultraschallwandlers bzw. des Eingangssignals am Messverstärker führen würde, keine Rolle mehr.

Ein weiterer selbstständig erfindungswesentlicher Aspekt des Ultraschallmessverfahrens bzw. -systems ist in der Steuerung des Verstärkungsfaktors des Messverstärkers von einem Minimal- auf einen Maximalwert zu sehen (sogenannte Sensitive Time Control - STC). Das Ausgangssignal des Ultraschallwandlers ist während der Ausschwingphase relativ groß und insbesondere durch das Ausschwingen des Schwingelements induziert. Während dieser Phase ist der Verstärkungsfaktor des Messverstärkers gering. Er bleibt dies auch, da die ersten empfangenen Echos (d.h. Echos aus dem Nahbereich) noch relativ energiestark sind, so dass der Messverstärker das Ausgangssignal des Ultraschallwandlers nur relativ mäßig verstärkt, was auch unter dem Aspekt der Vermeidung einer Fehldeutung von Echosignalen auf Grund von Bodenechos von Vorteil ist. Mit zunehmender Dauer werden die empfangenen Echosignale aber leistungsschwächer, so dass es sinnvoll ist, den Verstärkungsfaktor in Abhängigkeit von der Zeit zu vergrößern. Genau dieser Ansatz wird bei der hier beschriebenen selbstständig erfindungswesentlichen Variante des Ultraschallmessverfahrens bzw. -systems genutzt.

Schließlich sei noch angemerkt, dass die Erfindung noch dahingehend erweiterbar ist, dass eine elektrische Energiequelle mit einer Ladungspumpe zum Betreiben des Ultraschallwandlers während einer Sendephase vorgesehen ist. Hierdurch wird erreicht, dass für den Ultraschallwandler stets ausreichend Ansteuerenergie zur Verfügung steht, auch wenn das (Bord-)Spannungsnetz, an das der Ultraschallwandler angeschlossen ist, Schwankungen unterliegt.

Mit dem erfindungsgemäßen Ansatz lässt sich also ein Ultraschallmessverfahren bzw. -system realisieren, das bei geringem Hardwareaufwand insbesondere im Nahbereich eine bessere Performance aufweist. Hierbei sind in erster Linie die folgenden Merkmale und Eigenschaften wesentliche und zwar jede für sich allein bzw. jede mögliche Kombination einzelner Maßnahmen. Im Einzelnen handelt es sich um folgende selbstständig erfindungswesentliche Merkmale:
1. Ein schaltbarer Innen- bzw. Dämpfungswiderstand, der innerhalb eines Empfangsintervalls lediglich während der anfänglichen Ausschwingphase des Empfangsintervalls nach Beendigung des Sendeintervalls aktiv ist, wobei der Dämpfungswiderstand vorzugsweise hinsichtlich einer ungewollten Anregung des Schwingelements des Ultraschallwandlers störarm auf- und abgeschaltet werden sollte.
2. Elektronisches Dämpfen mit auf die Schwingphase des Ultraschallwandlers abgestimmter Gegenpulsansteuerung, wobei hier auf die Schwingphase des Schwingelements abgestimmt wird. In Pausen zwischen den Dämpfungspulsen wird die Phasenlage des Schwingelements erneut bestimmt, um den nächsten günstigen Dämpfungspulszeitpunkt zu bestimmen. Außerdem kann die Dauer und Höhe des Dämpfungspulses und damit die Energie, die zum Abbremsen des Schwingelements benutzt wird, an die sich verringernde Energie des ausschwingenden Schwingelements angepasst werden.
3. Bei der Signalverarbeitung wird zweckmäßigerweise ein rauscharmer Verstärker verwendet und eine schmalbandige Filterung, um die Signalgüte ausreichend zu verarbeiten.
4. Antiparallele Dioden o.dgl. Spannungsbegrenzungselemente im Ansteuerpfad, die nach dem Senden des Ansteuerungssignals aktiv werden, um dafür zu sorgen, dass der Verstärker schnell in den Arbeitspunkt zurückkehrt, damit das nachgeschaltete schmalbandige Filter keine Einbrüche zeigt.
5. Eine digitale Sensitivity Time Control (STC) mit über der Zeit steigender Verstärkung (des Messverstärkers) sorgt für eine Reduktion der Bodenechoerkennung im Nahbereich (durch die anfangsniedrige Verstärkung) und eine Erhöhung der zu untersuchenden Echoamplitude im Fernbereich (durch hohe Verstärkung bei weiter Distanz). Damit erreicht man bei niedriger Anfangsverstärkung keine Übersteuerung der Echoamplitude im Nahbereich, aber eine akzeptable Verstärkung bei größeren Distanzen.

Nachfolgend wird anhand der Figuren ein Ausführungsbeispiel der Erfindung näher erläutert. Im Einzelnen zeigen dabei:
- Fig. 1: ein schematisches Systemschaltbild,

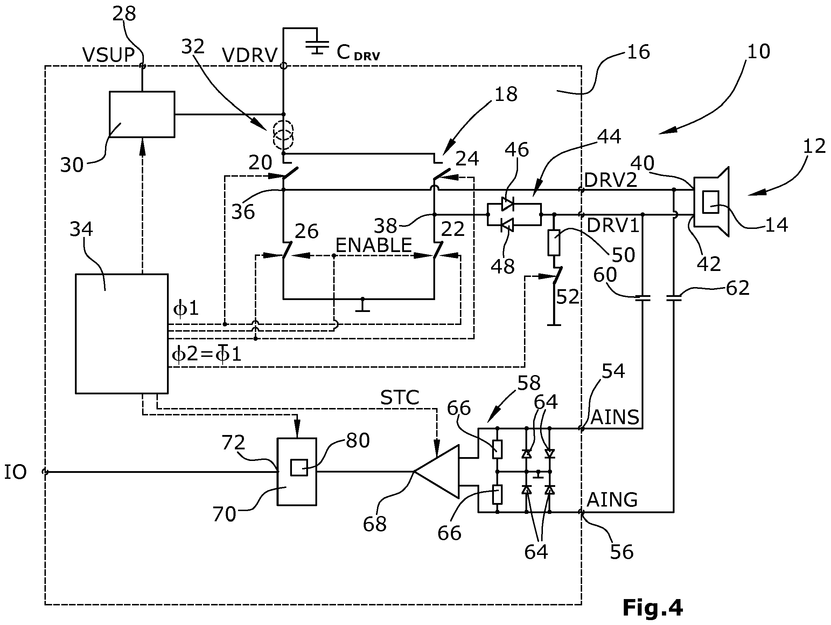

- Fign. 2 bis 5: das Systemschaltbild gemäß Fig. 1 in verschiedenen Phasen des Betriebs des Ultraschallwandlers und den entsprechenden Schalterstellungen in diesen Phasen,
- Fig. 6: das elektrische Ersatzschaltbild des Ultraschallwandlers und

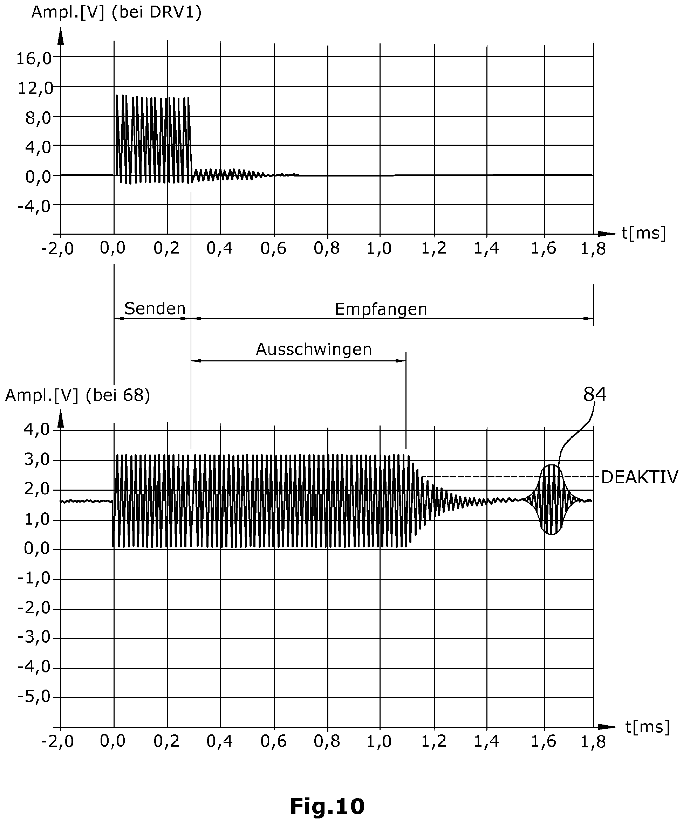

- Fign. 7 bis 11: verschiedene Signalverläufe an einzelnen Punkten des Systemschaltbildes gemäß Fig. 1.

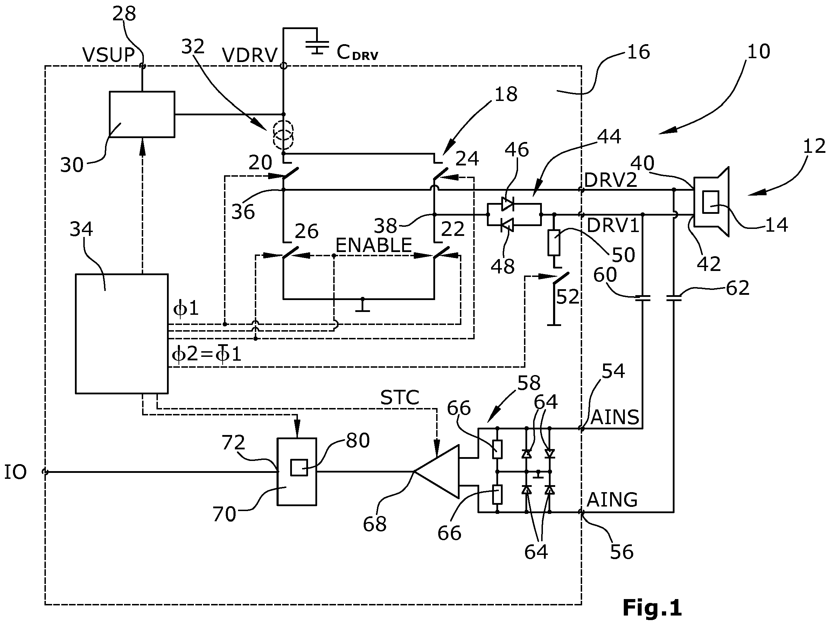

In Fig. 1 ist schematisch das Gesamtschaltbild eines Ultraschallmesssystems 10 gezeigt. Das System 10 umfasst einen Ultraschallwandler 12 (nachfolgend auch Transducer genannt) auf, der wechselweise als Ultraschallsender und als Ultraschallempfänger arbeitet. Der Ultraschallwandler 12 weist ein bei 14 dagestelltes Schwingelement (beispielsweise Membran) auf, die über ein elektrisches Ansteuersignal angeregt wird, um Ultraschallwellen zu erzeugen.

Zur Ansteuerung des Ultraschallwandlers 12 dient eine Ansteuer- und Auswerteeinheit 16, die eine in diesem Ausführungsbeispiel als Schalter-Vollbrücke 18 ausgebildete Ansteuerschaltung aufweist. Die vier Schalter 20,22,24,26 werden paarweise geschlossen und geöffnet, um an den Ultraschallwandler 12 wechselweise umgepolte Steuerspannungen anzulegen, wodurch das Schwingelement 14 zu Schwingungen angeregt wird. Die Ansteuereinheit- und Auswerteeinheit 16 wird von einem Versorgungsspannungspotential versorgt, das am Knotenpunkt 28 anliegt.

Mit diesem Knotenpunkt 28 ist eine Ladungspumpe 30 verbunden, deren Ausgang mit der Vollbrückenschaltung 18 verbunden ist. Zwischen der Ladungspumpe 30 und der Vollbrückenschaltung 18 könnte eine in Fig. 1 gestrichelt dargestellte Stromquelle 32 angeordnet sein. Zur Steuerung der (Halbleiter-) Schalter 20 bis 26 der Vollbrückenschaltung 18 dient eine Steuereinheit 34, die um 180° phasenverschobene Ansteuerpulse (Signale Φ₁ und Φ₂) auf die Schalter 20 bis 26 gibt.

Wie anhand von Fig. 1 zu erkennen ist, ist der Ultraschallwandler 12 mit den Knotenpunkten 36,38 zwischen jeweils den Schaltern 20 und 26 bzw. 22 und 24 der Vollbrückenschaltung 18 verbunden. Der Ultraschallwandler 12 weist zwei Anschlüsse 40,42 auf, von denen der Anschluss 40 direkt mit dem Knotenpunkt 36 der Vollbrückenschaltung 18 verbunden ist. In der Verbindungsleitung des Anschlusses 42 des Ultraschallwandlers 12 mit dem Knotenpunkt 38 der Vollbrückenschaltung 18 ist eine Spannungsbegrenzungseinheit 44 geschaltet, die in diesem Ausführungsbeispiel zwei antiparallel angeordnete Dioden 46,48 aufweist. Ferner zweigt von der Verbindungsleitung, die in die Spannungsbegrenzungseinheit 44 verschaltet ist, eine Leitung mit einem Dämpfungswiderstand 50 und einem Schalter 42 ab. Der Schalter 52 wird von der Steuereinheit 34 angesteuert.

Die Anschlüsse 40,42 des Ultraschallwandlers 12 sind darüber hinaus mit dem Eingangsanschlüssen 54,56 eines Messverstärkers 58 elektrisch verbunden, wobei in den beiden elektrischen Verbindungsleitungen Entkopplungskondensatoren 60,62 geschaltet sind. Am Eingang des Messverstärkers 58 befindet sich eine Schutzbeschaltung aus Dioden 64 sowie eine Beschaltung zur Definition des Eingangspotentials des Messverstärkers 58 mittels Widerständen 66. Der Ausgang 68 des Messverstärkers 58 ist mit einer Signalverarbeitungs- und Auswerteschaltung 70 verbunden, an deren Ausgang 72 ein empfangenes Echosignal repräsentierendes Ausgangssignal ansteht, das applikationsabhängig weiter verarbeitet wird, und zwar vorzugsweise außerhalb der Ansteuer- und Auswerteeinheit 16.

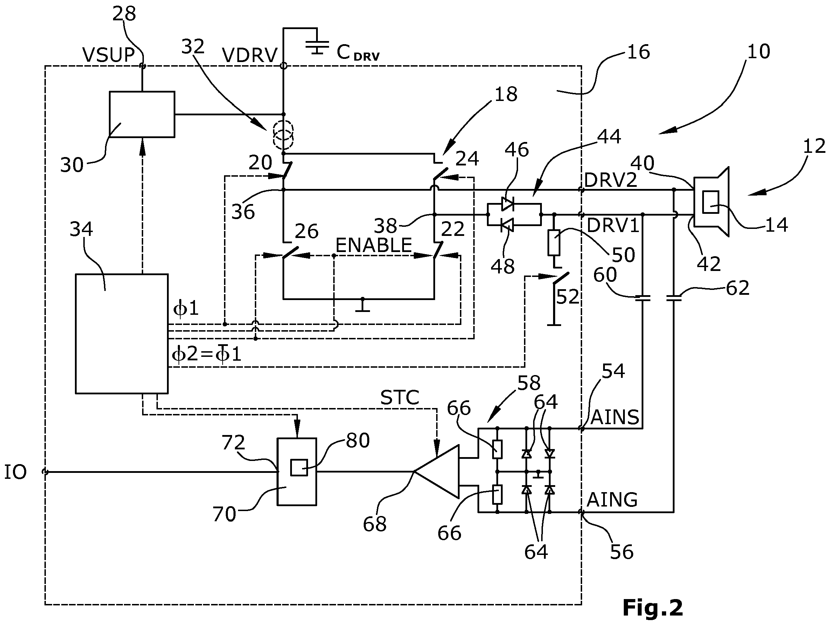

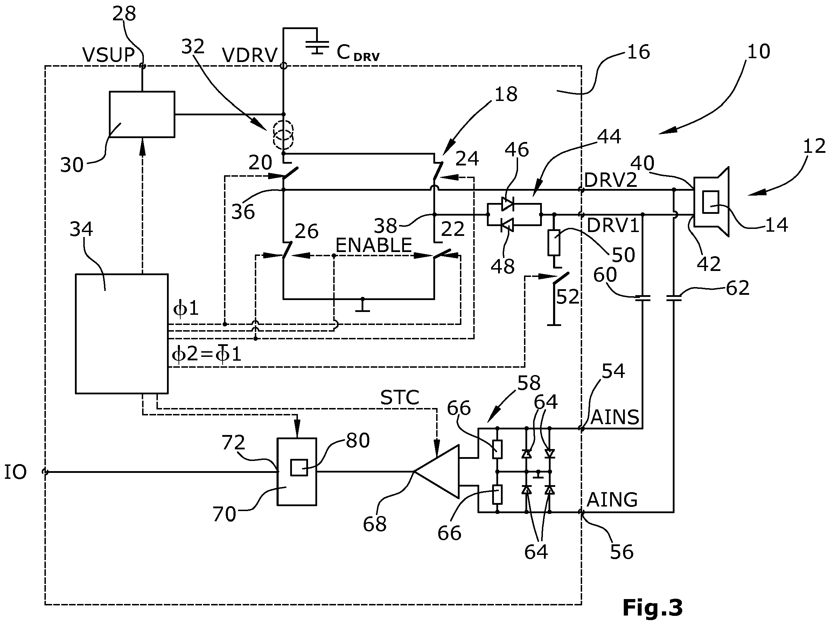

Die Schalterstellungen der Vollbrückenschaltung 18 während eines Sendeintervalls sind in den Fign. 2 und 3 gezeigt. Zu erkennen ist, dass die Schalter 20 und 22 bzw. 24 und 26 wechselweise ein- und ausgeschaltet werden, so dass der Ultraschallwandler 12 entsprechend angesteuert und sein Schwingelement 14 in Schwingungen versetzt wird. Zu diesem Zeitpunkt ist der Schalter 52 ausgeschaltet, d.h. der Dämpfungswiderstand 50 ist nicht aktiv; er könnte allerdings aktiv geschaltet, also mit Masse verbunden sein. Während des Sendeintervalls liegt das Ansteuersignal für den Ultraschallwandler 12 auch am Eingang des Messverstärkers 58 an. Die Eingangsschutzstruktur (Dioden 64) sorgt dafür, dass der Messverstärker 58, der eine recht große und sich mit der Zeit vergrößernde Verstärkung aufweist, nicht zerstört wird. Auch die beiden Entkopplungskondensatoren 60,62 begrenzen den Strom in den Eingang des Messverstärkers 58 hinein.

Mit Beendigung des Sendeintervalls wird der Dämpfungswiderstand 50 aktiv geschaltet, indem der Schalter 52 geschlossen wird. Ebenso werden die beiden Schalter 22 und 26 der Vollbrückenschaltung 18 geschlossen, so dass, auf den Ultraschallwandler 12 bezogen, dessen Eingangsanschlüsse 40,42 über die Parallelschaltung aus der Spannungsbegrenzungseinheit 44 und dem Dämpfungswiderstand 50 verbunden sind. Während der Anfangsphase des Empfangsintervalls also unmittelbar nach Beendigung des Sendeintervalls schwingt das Schwingelement 14 aus. Während dieser Ausschwingphase wird das vom Ultraschallwandler 12 ausgegebene Signal durch die Beschaltung mittels des Dämpfungswiderstandes 50 gedämpft.

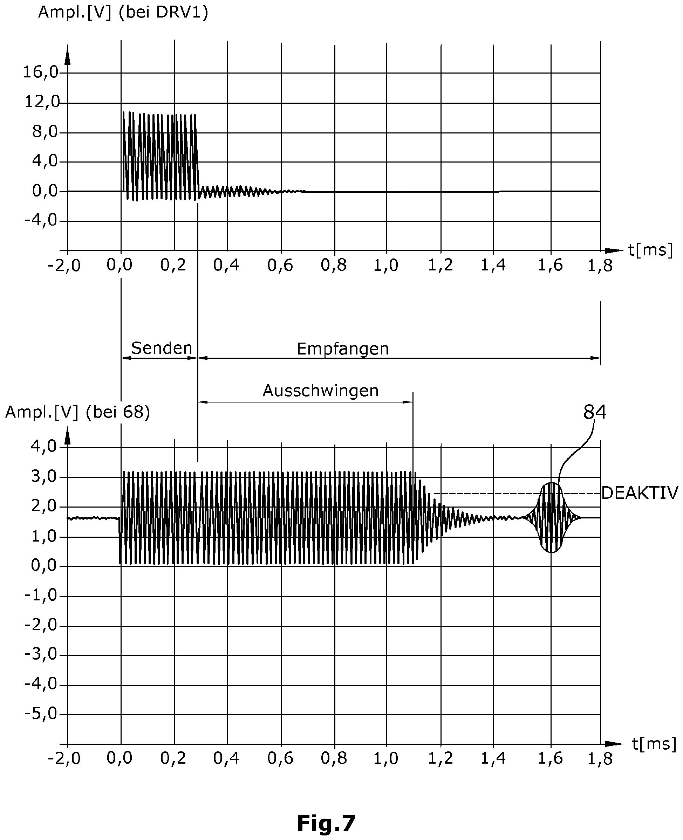

Ferner wird über die Spannungsbegrenzungseinheit 44 der Signalhub am Eingang 54,56 des Messverstärkers 58 begrenzt (nämlich auf die Durchlassspannung der Dioden 46,48). Diese Situation ist in Fig. 7 gezeigt; im unteren Diagramm ist der Verlauf des Signals am Ausgang 68 des Messverstärkers 58 gezeigt, während das obere Diagramm das Ansteuersignals für den Ultraschallwandler 12 zeigt. Zu erkennen ist, dass mit Beendigung des Sendeintervalls die Spannungsbegrenzung durch die Spannungsbegrenzungseinheit 44 wirksam wird.

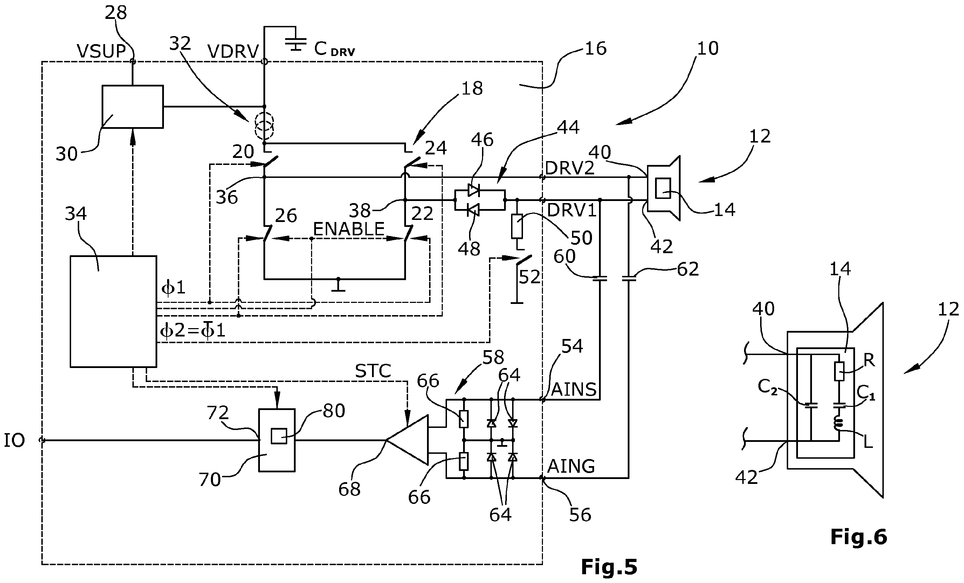

Wie bereits oben erwähnt, dient der Dämpfungswiderstand 50 (oder allgemein die Modulation des Widerstandes bzw. der Impedanz der Ansteuer- und Auswerteeinheit 16) zur Verkürzung der Ausschwingphase des Schwingelements 14. Sobald die Spannung am Ausgang des Ultraschallwandlers 12 (oder am Ausgang 68 des Messverstärkers 58) eine Deaktivierungsschwelle (siehe DEAKTIV in Fig. 7 unten) unterschreitet, wird der Schalter 52 wieder geöffnet, so dass der Dämpfungswiderstand 50 inaktiv geschaltet ist. Dies ist in Fig. 5 gezeigt.

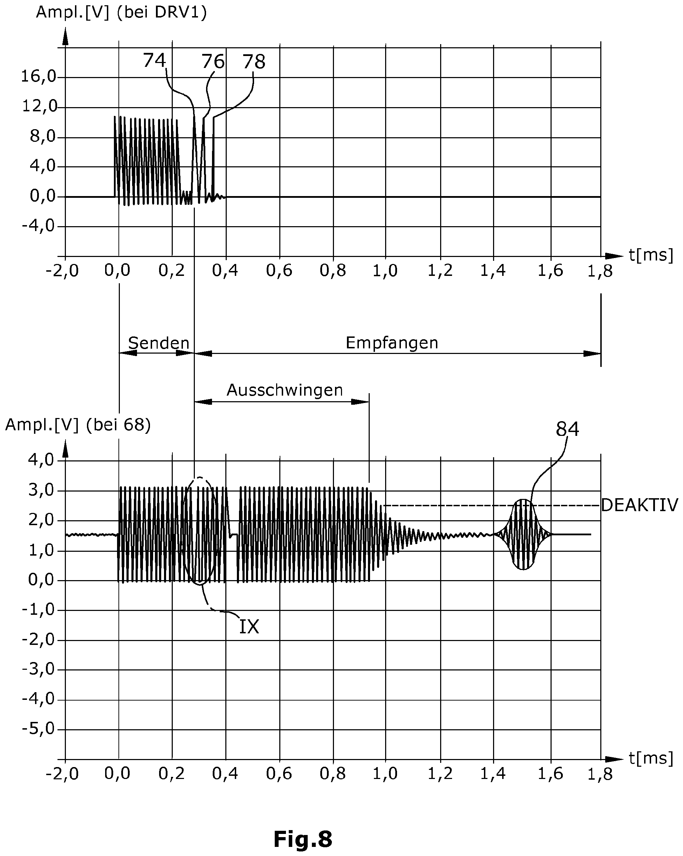

Weitere Maßnahme oder aber auch als Alternative zum Dämpfungswiderstand 50 bietet es sich an, die Ausschwingphase durch das gezielte Anlegen von Dämpfungspulsen an den Ultraschallwandler 12 innerhalb von dessen Ansteuersignalphase zu reduzieren. Die sich daraus ergebenden Signalverläufe DRV1 und dem Ansteuersignal des Messverstärkers 58 sind in Fig. 8 oben bzw. unten gezeigt. Die Dämpfungspulse sind dabei im oberen Diagramm der Fig. 8 bei 74 und 76 sowie 78 gezeigt. Zu erkennen ist, dass das Ausgangssignal des Messverstärkers 58 zeitlich eher als ohne Dämpfungspulse (siehe Fig. 7 unten) die Deaktivierungsschwelle DEAKTIV zum Abschalten des Dämpfungswiderstands 50 erreicht.

Die Dämpfungspulse, die über die Vollbrückenschaltung 18 auf den Ultraschallwandler 12 gegeben werden, sollten dabei in Idealfall um 180° phasenverschoben zur Phase des Ausschwingens des Schwingelements 14 sein. Allerdings besteht die Problematik darin, dass die exakte Phasenlage des Schwingelements 14 durch Untersuchung des Ausgangssignals des Ultraschallwandlers 12 nicht so ohne Weiteres ermittelbar und allenfalls abschätzbar ist. Anhand des elektrischen Ersatzschaltbildes des Ultraschallwandlers 12 gemäß Fig. 6 ist dies nachvollziehbar. Das Ersatzschaltbild umfasst eine Reihenschaltung aus einem Widerstand R einer Kapazität C₁ und einer Induktivität L. Parallel dazu befindet sich noch eine weitere Kapazität C₂. Die Phasenlage des Stroms durch die Induktivität L würde das Ausschwingen des Schwingelements 14 repräsentieren. Allerdings weicht die Phasenlage dieses Stroms von der Phasenlage der Perioden der Schwingungen des Ausgangssignals des Ultraschallwandlers 12 ab. Wenn also beispielsweise durch einen Phasenlagendetektor 80, der zweckmäßigerweise als Nulldurchgangsdetektor ausgebildet und ferner Bestandteil der Signalverarbeitung- und Auswerteschaltung 70 sein kann, die Phasenlage des Ausgangssignals des ausschwingenden Ultraschallwandlers 12 detektiert wird, kann ein entsprechendes Setzen eines Dämpfungspulses mit entsprechender Phasenlage gezielt zu einer Dämpfung des Ausschwingens des Schwingelements 14 genutzt werden. Dabei ist zu berücksichtigen, dass das Schwingelement 14 beim Ausschwingen seine Eigenfrequenz annimmt, was aber nicht notwendigerweise der Fall bei der Ansteuerung des Ultraschallwandlers 12 der Fall sein muss. Außerdem ist die Eigenfrequenz des Ultraschallwandlers 12 bzw. des Schwingelements 14 temperatur- und alterungsabhängig, kann also im Vorhinein nicht als bekannt bzw. gegeben angenommen werden. Aus diesem Grund sollte also eine Untersuchung der Phasenlage der Schwingungen des Ausgangssignals des Ultraschallwandlers 12 erfolgen, um dann aus diesem Signal die Phasenlage des Schwingelements 14 abzuleiten bzw. abzuschätzen, um dann wieder um im Idealfall 180° phasenverschoben zur Schwingung des Schwingelements 14 den einen oder die mehreren Dämpfungspulse zu setzen.

Im Ausführungsbeispiel gemäß Fig. 8 oben wurden insgesamt drei Dämpfungspulse 74,76 und 78 (Einzelpulse) gesendet, wobei der dritte Dämpfungspuls 78 eine verringerte Energie aufweist. Beim Senden der Dämpfungspulse (Anzahl und Energie) sollte darauf geachtet werden, dass die Dämpfungspulse nicht fehlerhafterweise zur Anregung des Schwingelements 14 führen, was kontraproduktiv wäre.

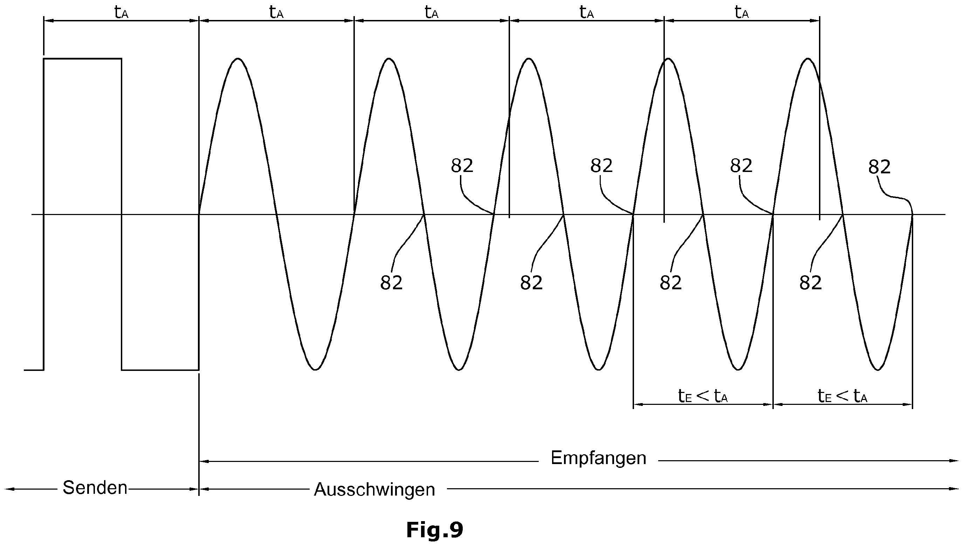

Die Dauer eines/jedes Dämpfungspulses 74,76,78 ist fest eingestellt und ist gleich der Hälfte T_{A/2} der Anregungsperiode t_{A} des Schwingelements 14. Wegen der bauteiltoleranzbedingten Unterschiede von Anregungs- und Eigenfrequenz ist somit ein/jeder Dämpfungspuls kürzer oder länger als die Hälfte t_{E/2} der Eigenschwingungsperiode t_{E} des Schwingelements 14 in der Ausschwingphase (siehe Fig. 9 als vergrößerter Ausschnitt IX des Zeitverlaufs der Schwingung des Schwingelements 14 in der Übergangsphase am Ende eines Sendeintervalls und zu Beginn eines Empfangsintervalls mit den Nulldurchgängen 82 in der Ausschwingphase. Aus Gründen der besseren Erkennbarkeit des Einnehmens der Eigenfrequenz des Schwingelements 14 nach dem Sendeintervall schwingt das Schwingelement 14 in der vereinfachten Darstellung der Fig. 9 bereits nach zwei Schwingungen bei seiner Eigenfrequenz.

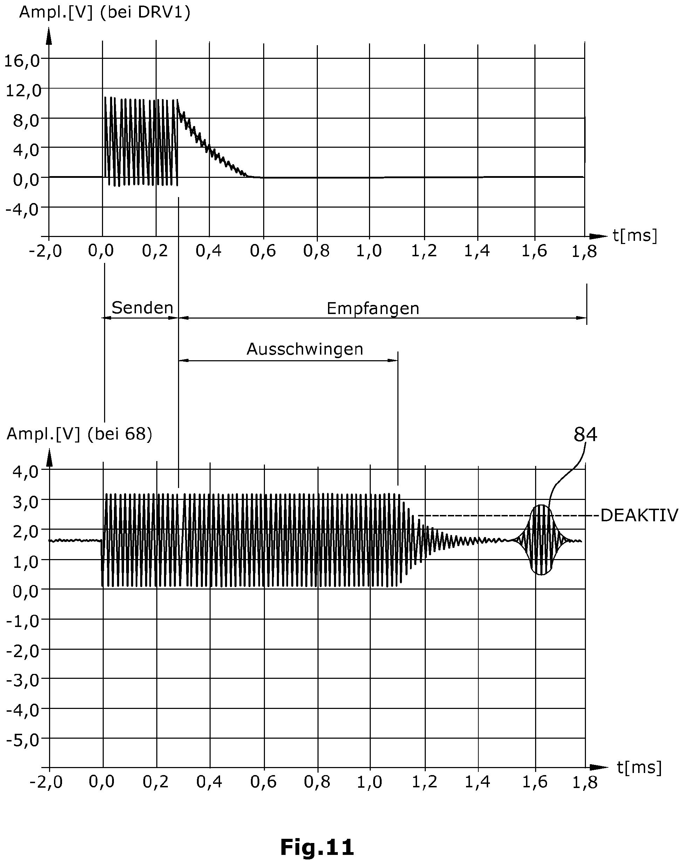

Fig. 9 zeigt nochmals im unteren Diagramm das (bis zum Ende der Ausschwingphase übersteuerte) Signal am Ausgang 68 des Messverstärkers 58, das sich zeitlich zusammensetzt aus den Ansteuersignalen der Vollbrückenschaltung 18 während eines Sendeintervalls, dem Ausschwingsignal des Schwingelements 14 in der Ausschwingphase und möglichen Echo (wie z.B. bei 84 gezeigt), die während der sich an die Ausschwingphase anschließenden Phase eines Empfangsintervalls detektierbar sind. Im oberen Diagramm der Fig. 9 ist nochmals dargestellt, wie sich das Ansteuersignal an DRV1 und damit am Eingang des Messverstärkers 58 darstellt. In dem Beispiel der Fig. 9 oben erkennt man, dass mit Beendigung des Sendeintervalls die Spannungsbegrenzungseinheit 44 wirksam wird, was sich in einer deutliche Reduktion des Eingangssignals des Messverstärkers wiederspiegelt. Fig. 11 zeigt im oberen Diagramm den Fall, dass die Spannungsbegrenzungseinheit 44 nicht aktiv geschaltet ist. Hier wirkt sich aus, dass die beiden Kondensatoren 60,62 am Eingang des Messverstärkers 58 aufgeladen und zunächst entladen werden müssen, was zu dem langsamen Abfall der Eingangsspannung am Messverstärker 58 und Beendigung des Sendeintervalls führt, wodurch der Messverstärker 58 erst verspätet in seinen Arbeitspunkt gelangt, um, wenn er diesen eingenommen hat, auf Echos 84 zurückzuführende Ausganssignale des Ultraschallwandlers 12 verstärken zu können. Durch die Spannungsbegrenzungseinheit 44 wird also der Messverstärker 58 im Wesentlichen mit Beendigung des Sendeintervalls in seinen Arbeitspunkt überführt.

Wenn der Messverstärker 58 seinen Arbeitspunkt eingenommen hat, verstärkt er gemäß einem weiteren vorteilhaften Aspekt der Erfindung die Eingangssignale mit geringstmöglichem Verstärkungsfaktor, so dass sich am Ausgang 68 des Verstärkers 58 keine Übersteuerung einstellt. Zeitgesteuert von der Steuereinheit 34 wird dann der Verstärkungsfaktor des Messverstärkers 58 vergrößert, so dass auch von weiter entfernt kommende Echosignale, die entsprechend niederenergetisch sind, noch ausreichend verstärkt werden können, um dann in der Signalverarbeitungs- und Auswerteschaltung 70 detektiert zu werden. Durch die niedrige Verstärkung von Echosignalen im Nahbereich wird überdies verhindert, dass bei der Applikation des Ultraschallmesssystems 10 für eine Fahrzeug-Parkhilfe Bodenechos als von Hindernissen stammende Echosignale und damit fehlerhafterweise erkannt werden. Diese Bodenechosignale kommen aus dem Nahbereich und werden, da die Verstärkung des Messverstärkers 58 nur gering ist, eben gerade kaum verstärkt.

### BEZUGSZEICHENLISTE

- 10: Ultraschallmesssystem
- 12: Utraschallwandler
- 14: Schwingelement des Ultraschallwandlers
- 16: Ansteuer- und Auswerteinheit
- 18: Vollbrückenschaltung
- 20: Schalter
- 22: Schalter
- 24: Schalter
- 26: Schalter
- 28: Knotenpunkte
- 30: Ladungspumpe
- 32: (optionale) Stromquelle
- 34: Steuereinheit
- 36: Knotenpunkt
- 38: Knotenpunkt
- 40: Anschluss (Eingangs- bzw. Ausgangsanschluss) des Ultraschallwandlers
- 42: Anschluss (Eingangs- bzw. Ausgangsanschluss) des Ultraschallwandlers
- 44: Spannungsbegrenzungseinheit
- 46: Diode
- 48: Diode
- 50: Dämpfungswiderstand
- 52: Schalter
- 54: Eingangsanschluss (Eingang) des Messverstärkers
- 56: Eingangsanschluss (Eingang) des Messverstärkers
- 58: Messverstärker
- 60: Entkopplungskondensator
- 62: Entkopplungskondensator
- 64: Schutzdioden
- 66: Widerstände
- 68: Ausgang des Messverstärkers
- 70: Signalverarbeitungs- und Auswerteschaltung
- 72: Ausgang der Auswerteschaltung
- 74: Dämpfungspuls
- 76: Dämpfungspuls
- 78: Dämpfungspuls
- 80: Phasenlagendetektor
- 82: Nulldurchgang der Schwingung des Schwingelements in der Ausschwingphase
- 84: Echo
- C₁: Kapazität
- C₂: Kapazität
- L: Induktivität
- R: Widerstand

## Patentansprüche

1. Verfahren zur Messung mittels Ultraschall, insbesondere als Parkhilfe für Fahrzeuge, bei dem
- ein ein Schwingelement (14) aufweisender, elektroakustischer Ultraschallwandler (12), der ohne Spannungsumsetzer (54,56) an seinem Eingang betrieben wird, für die Dauer eines Sendeintervalls mit einem insbesondere Pulsfolge-Ansteuersignal zur Erzeugung von Ultraschallwellen angesteuert wird,
- sich an das Sendeintervall mit Beendigung der Ansteuerung des Ultraschallwandlers (12) ein Empfangsintervall anschließt, wobei das Schwingelement (14) des Ultraschallwandlers (12) während einer mit Beendigung des Sendeintervalls beginnenden Ausschwingphase ausschwingt,
- der Ultraschallwandler (12) spätestens ab Beginn der Ausschwingphase zur Verkürzung derselben mit mindestens einem Dämpfungswiderstand (50) beschaltet wird,
- die Beschaltung des Ultraschallwandlers (12) mit dem Dämpfungswiderstand (50) beendet wird, wenn das Ausgangssignal des Ultraschallwandlers (12) oder das Ausgangssignal eines mit dem Ultraschallwandler (12) verbundenen Messverstärkers (58) oder einer diesem nachgeordneten Schaltung (70) eine vorgebbare Deaktivierungsschwelle unterschreitet und
- danach während des Empfangsintervalls mindestens ein Echo einer in dem vorherigen Sendeintervall ausgesendeten Ultraschallwelle oder eine andere Ultraschallwelle detektiert werden kann,
- **dadurch gekennzeichnet, dass** der Ultraschallwandler (12) mit dem Dämpfungswiderstand (50) erst mit Beendigung des Sendeintervalls und/oder mit Beginn des Empfangsintervalls beschaltet wird.

2. Verfahren nach Anspruch 1, **dadurch gekennzeichnet, dass** zur weiteren Verkürzung der Ausschwingphase anhand des Ausgangssignals des Ultraschallwandlers (12) und/oder des Ausgangssignals des Messverstärkers (58) die Phasenlage des Ausschwingens des Schwingelements (14) des Ultraschallwandlers (12) ermittelt oder zumindest abgeschätzt wird und dass der Ultraschallwandler (12) mit mindestens einem zum Ausgangssignal des Ultraschallwandlers (12) phasenverschobenen, insbesondere Einzel-, Doppel- oder Mehrfach-Dämpfungspuls (74,76,78) beaufschlagt wird.

3. Verfahren nach Anspruch 2, **dadurch gekennzeichnet, dass** nach der Beaufschlagung des Ultraschallwandlers (12) durch einen ersten, insbesondere Einzel-, Doppel- oder Mehrfach-Dämpfungspuls (78) zunächst wiederum die Phasenlage der Perioden des gedämpften Ausschwingens des Schwingelements (14) des Ultraschallwandlers (12) ermittelt oder zumindest abgeschätzt wird und dass der Ultraschallwandler (12) mit einem weiteren zum Ausganssignal des Ultraschallwandlers (12) phasenverschobenen, insbesondere Einzel-, Doppel- oder Mehrfach-Dämpfungspuls beaufschlagt wird.

4. Verfahren nach Anspruch 2 oder 3, **dadurch gekennzeichnet, dass** bei Beaufschlagung des Ultraschallwandlers (12) mit mehreren Dämpfungspulsen (74,76,78) deren Energie verändert, insbesondere von Dämpfungspuls (74,76,78) zu Dämpfungspuls (74,76,78) verringert wird.

5. Verfahren nach einem der Ansprüche 1 bis 4, **dadurch gekennzeichnet, dass** das vom Ultraschallwandler (12) während einer Empfangsphase empfangene akustische Signal in ein elektrisches Messsignal umgesetzt wird, das einem Messverstärker (58) als Eingangssignal zugeführt und in dem Messverstärker (58) verstärkt wird, und dass das Eingangssignal des Messverstärkers (58) auf einen den Arbeitspunkt des Messverstärkers (58) definierenden Wert begrenzt wird.

6. Verfahren nach einem der Ansprüche 1 bis 5, **dadurch gekennzeichnet, dass** zwischen dem Ultraschallwandler (12) und dem Messverstärker (58) mindestens ein Entkopplungskondensator (60,62) angeordnet ist und dass der Ultraschallwandler (12) und damit der Messverstärker (58) zumindest während eines Empfangsintervalls und/oder zumindest für die Dauer eines Empfangsintervalls mit einer Spannungsbegrenzungseinheit (44), wie z.B. zwei antiparallel geschaltete Spannungsbegrenzungselemente (46,48), insbesondere mit pn-Übergängen beschaltet wird.

7. Verfahren nach einem der Ansprüche 1 bis 6, **dadurch gekennzeichnet, dass** der Verstärkungsfaktor eines Messverstärkers (58), um den das Eingangssignal verstärkt wird, insbesondere pro Empfangsintervall und insbesondere nach der Unterschreitung der Deaktivierungsschwelle durch das Ausgangssignal des Ultraschallwandlers (12) oder eines mit dem Ultraschallwandler (12) verbundenen Messverstärkers (58) oder einer diesem nachgeordneten Schaltung (70) bei geringstmöglicher Verstärkung zeitgesteuert so vergrößert, dass auch von weiter entfernt kommende Echos, die entsprechend niederenergetisch sind, noch ausreichend verstärkt werden, so dass sich am Ausgang (68) des Verstärkers (58) keine Übersteuerung einstellt.

8. Verfahren nach einem der Ansprüche 1 bis 7, **dadurch gekennzeichnet, dass** eine elektrische Energiequelle mit einer Ladungspumpe (30) zum Betreiben des Ultraschallwandlers (12) während einer Sendephase vorgesehen ist.

9. Ultraschallmesssystem, insbesondere als Parkhilfe für Fahrzeuge, mit
- einem ein Schwingelement (14) aufweisenden, spannungsumsetzerlosen Ultraschallwandler (12), der wahlweise sowohl als Ultraschallsender als auch als Ultraschallempfänger betreibbar ist und mindestens einen entweder als Eingang oder als Ausgang dienenden Signalanschluss (40,42) aufweist, und
- einer mit dem mindestens einen Signalanschluss (40,42) des Ultraschallwandlers (12) verbundenen Ansteuer- und Auswerteeinheit (16) zur Anregung des Schwingelements (14) des Ultraschallwandlers (12) zum Aussenden von Ultraschallwellen für den Betrieb als Ultraschallsender während eines Sendeintervalls und zur anschließenden Deaktivierung der Anregung des Schwingelements (14) des Ultraschallwandlers (12) zum Empfangen von Ultraschallwellen für den Betrieb als Ultraschallempfänger während eines Empfangsintervalls und zur Verarbeitung von an dem mindestens einen Signalanschluss (40,42) des Ultraschallwandlers (12) anliegenden Signalen, wobei das Schwingelement (14) nach Beendigung seiner Anregung während einer Ausschwingphase ab dem Beginn eines Empfangsintervalls ausschwingt,
**dadurch gekennzeichnet,**
- **dass** die Ansteuer- und Auswerteeinheit (16) zur Verkürzung der Ausschwingphase des Schwingelements (14) mindestens einen schaltbaren Dämpfungswiderstand (50) aufweist, der auf den mindestens einen Signalanschluss (40,42) des Ultraschallwandlers (12) aufschaltbar ist, und zwar durch die Ansteuer- und Auswerteeinheit (16) gesteuert und mit Beendigung des Sendeintervalls und/oder mit Beginn des Empfangsintervalls,
- **dass** die Größe des Ausgangssignals des Ultraschallwandlers (12) oder die Größe eines Ausgangssignals eines Messverstärkers (58) oder einer diesem nachgeordneten Schaltung (70) der Ansteuer- und Auswerteeinheit (16) zumindest ab Beginn der Ausschwingphase mit einer vorgebbaren Deaktivierungsschwelle verglichen wird und
- **dass** die Ansteuer- und Auswerteeinheit (16) die Aufschaltung des Dämpfungswiderstandes (50) auf den mindestens einen Signalanschluss (40,42) des Ultraschallwandlers (12) beendet, wenn das Ausgangssignal kleiner als oder gleich der Deaktivierungsschwelle ist.

10. Ultraschallmesssystem nach Anspruch 9, **dadurch gekennzeichnet, dass** der Signalanschluss (40,42) des Ultraschallwandlers (12) über den Dämpfungswiderstand (50) elektrisch mit Masse verbunden ist.

11. Ultraschallmesssystem nach Anspruch 9 oder 10, **dadurch gekennzeichnet, dass** die Ansteuer- und Auswerteeinheit (16) zur weiteren Verkürzung der Ausschwingphase des Schwingelements (14) des Ultraschallwandlers (12) zumindest einen Dämpfungspuls (74,76,78) erzeugt, mit dem der mindestens eine Signalanschluss (40,42) des Ultraschallwandlers (12) während einer Ausschwingphase beaufschlagbar ist, wobei anhand eines Phasenlagendetektors (80) der Ansteuer- und Auswerteeinheit (16) die Phasenlage der Schwingungen des Ausschwingsignals des Ultraschallwandlers (12) während einer Ausschwingphase ermittelbar und anhand dessen die Phasenlage des Ausschwingens des Schwingelements des Ultraschallwandlers (12) abschätzbar ist, wobei der Ultraschallwandler (12) mit einem zum. Ausschwingsignal des Ultraschallwandlers (12) phasenverschobenen, insbesondere Einzel-, Doppel- oder Mehrfach-Dämpfungspuls (74,76,78) ansteuerbar ist.

12. Ultraschallmesssystem nach Anspruch 11, **dadurch gekennzeichnet, dass** nach einer Ansteuerung des Ultraschallwandlers (12) durch einen Einzel-, Doppel- oder Mehrfach-Dämpfungspuls (74,76,78) mittels des Phasenlagendetektors (80) die Phasenlage der Schwingungen des gedämpften Ausschwingsignals des Ultraschallwandlers (12) ermittelbar und anhand dessen die Phasenlage des gedämpften Ausschwingens des Schwingelements (14) des Ultraschallwandlers (12) abschätzbar ist, wobei der Ultraschallwandler (12) durch zumindest einen weiteren zum Ausschwingsignal des Ultraschallwandlers (12) phasenverschobenen, insbesondere Einzel-, Doppel- oder Mehrfach-Dämpfungspuls (74,76,78) ansteuerbar ist.

13. Ultraschallmesssystem nach Anspruch 11 oder 12, **dadurch gekennzeichnet, dass** die Höhe und/oder die Breite der Dämpfungspulse (74,76,78) oder eines Dämpfungspulses (74,76,78) veränderbar und insbesondere von Dämpfungspuls (74,76,78) zu Dämpfungspuls (74,76,78) verkleinerbar ist.

14. Ultraschallmesssystem nach einem der Ansprüche 11 bis 13, **dadurch gekennzeichnet, dass** der Phasenlagendetektor (80) einen Nulldurchgangsdetektor aufweist.

15. Ultraschallmesssystem nach einem der Ansprüche 10 bis 14, **dadurch gekennzeichnet, dass** zwischen dem Ultraschallwandler (12) und einem Messverstärker (58) mindestens ein Entkopplungskondensator (60,62) angeordnet ist und dass die Ansteuer- und Auswerteeinheit (16) eine Spannungsbegrenzungseinheit (44) wie z.B. zwei antiparallel geschaltete Spannungsbegrenzungselemente (46,48), insbesondere mit pn-Übergängen aufweist, mit der, von der Ansteuer- und Auswerteinheit (16) gesteuert, von Beginn eines Empfangsintervalls an der mindestens eine Signalanschluss (40,42) des Ultraschallwandlers (12) und damit bei vorhandenem Messverstärker (58) dessen Eingang beschaltbar ist.

16. Ultraschallmesssystem nach einem der Ansprüche 10 bis 15, **dadurch gekennzeichnet, dass** ein Messverstärker (58) eine gesteuert veränderbare, insbesondere pro Empfangsintervall und insbesondere nach der Unterschreitung der Deaktivierungsschwelle durch das Ausgangssignal des Ultraschallwandlers (12) oder eines mit dem Ultraschallwandler verbundenen Messverstärkers (58) oder einer diesem nachgeordneten Schaltung (70) jeweils von kleinen auf große Werte veränderbaren Verstärkungsfaktor aufweist, wobei der Verstärkungsfaktor derart gesteuert vergrößerbar ist, dass der Ausgang des Messverstärkers (58) mit dem sich während eines Empfangsintervalls verkleinernden Ausgangssignals des Ultraschallwandlers (12) nicht übersteuert.

17. Ultraschallmesssystem nach einem der Ansprüche 10 bis 16, **dadurch gekennzeichnet, dass** die Ansteuer- und Auswerteeinheit (16) eine Ladungspumpe (30) zur Bereitstellung der Ansteuerenergie für den Ultraschallwandler (12) aufweist.

18. Ultraschallmesssystem nach einem der Ansprüche 10 bis 17, **dadurch gekennzeichnet, dass** die Ansteuer- und Auswerteeinheit (16) zur Ansteuerung des Ultraschallwandlers (12) während eines Sendeintervalls eine Ansteuerschaltung mit zwei oder vier zu einer Halb- bzw. Vollbrücke verschalteten, steuerbaren Schaltern (20,22,24,26) aufweist.

19. Ultraschallmesssystem nach Anspruch 18, **dadurch gekennzeichnet, dass** der Dämpfungswiderstand (50) oder die Spannungsbegrenzungseinheit (44) mit der Halb- bzw. Vollbrückenschaltung (18) verbunden und über einen der Schalter (20,22,24,26) der Halb- bzw. Vollbrückenschaltung (18) schaltbar ist.

## Claims

1. A method for measurement by means of ultrasound, particularly as a parking aid for vehicles, wherein
- an electro-acoustic ultrasonic transducer (12) comprising an oscillating element (14) and being operated without a voltage converter (54,56) at its input, is actuated with an actuation signal, in particular a pulse-train actuation signal, for the duration of a transmission interval in order to produce ultrasound waves,
- upon termination of the actuation of the ultrasonic transducer (12), the transmission interval is followed by a reception interval, with the oscillating element (14) of the ultrasonic transducer (12) decaying into a steady state during a decay phase beginning with the termination of the transmission interval,
- the ultrasonic transducer (12) is connected to at least one damping resistor (50) at the latest from the beginning of the decay phase in order to shorten the decay phase,
- the connection of the ultrasonic transducer (12) to the damping resistor (50) is terminated when the output signal of the ultrasonic transducer (12) or the output signal of a measuring amplifier (58) connected to the ultrasonic transducer (12) or of a circuit (70) connected downstream of said measuring amplifier falls below a predeterminable deactivation threshold, and
- thereafter, during the reception interval, at least one echo from an ultrasound wave emitted in the preceding transmission interval or another ultrasound wave can be detected,
**characterized in that**
- the ultrasonic transducer (12) being connected to the damping resistor (50) only upon termination of the transmission interval and/or upon the start of the reception interval.

2. The method according to claim 1, **characterized in that**, for further shortening of the decay phase, the phase position of the decaying of the oscillating element (14) of the ultrasonic transducer (12) is detected or at least estimated on the basis of the output signal of the ultrasonic transducer (12) and/or the output signal of the measuring amplifier (58), and that the ultrasonic transducer (12) is fed with at least one damping pulse (74,76,78), particularly a single, double or multiple damping pulse, which is shifted in phase relative to the output signal of the ultrasonic transducer (12).

3. The method according to claim 2, **characterized in that**, after the ultrasonic transducer (12) has been fed with a first damping pulse (78), particularly a single, double or multiple damping pulse, there is first again detected or at least estimated the phase position of the periods of the damped decay of the oscillating element (14) of the ultrasonic transducer (12), and that the ultrasonic transducer (12) is fed with a further damping pulse, particularly a single, double or multiple damping pulse, which is phase-shifted relative to the output signal of the ultrasonic transducer (12).

4. The method according to claim 2 or 3, **characterized in that**, while the ultrasonic transducer (12) is being fed with a plurality of damping pulses (74,76,78), the energy of the damping pulses is changed, particularly is reduced from damping pulse (74,76,78) to damping pulse (74,76,78).

5. The method according to any one of claims 1 to 4, **characterized in that** the acoustic signal received by the ultrasonic transducer (12) during a reception phase is converted into an electric measurement signal which is fed to the measurement amplifier (58) as an input signal and is amplified in the measurement amplifier (58), and that the input signal of the measurement amplifier (58) is limited to a value defining the operating point of the measurement amplifier (58).

6. The method according to any one of claims 1 to 5, **characterized in that** at least one decoupling capacitor (60,62) is arranged between the ultrasonic transducer (12) and the measurement amplifier (58), and that the ultrasonic transducer (12) and thus the measurement amplifier (58) at least during a reception interval and/or at least for the duration of a reception interval are connected to a voltage limiting unit (44) provided e.g. in the form of two antiparallel-connected voltage limiting elements (46,48) and particularly having p-n junctions.

7. The method according to any one of claims 1 to 6, **characterized in that** the gain of the measurement amplifier (58) by which the input signal is amplified, is increased - particularly per reception interval and particularly after the deactivation threshold has been underrun by the output signal of the ultrasonic transducer (12) or of a measurement amplifier (58) connected to the ultrasonic transducer (12) or of a circuit (70) connected downstream of the measurement amplifier (58) - with a smallest possible amplification, in a time-controlled manner, to the effect that also echoes coming from a farther distance that correspondingly are low-energetic, are still sufficiently amplified so that no overamplification occurs at the output (68) of the amplifier (58).

8. The method according to any one of claims 1 to 7, **characterized in that** an electric energy source having a charge pump (30) is provided for operating the ultrasonic transducer (12) during a non-transmission period.

9. An ultrasonic measurement system, particularly for use as a parking aid for vehicles, comprising
- an ultrasonic transducer (12) comprising an oscillating element (14) and being without a voltage converter, said ultrasonic transducer (12) being selectively operable both as an ultrasonic transmitter and as an ultrasonic receiver and comprising at least one signal terminal (40,42) serving either as an input or as an output, and
- a controlling and evaluating unit (16) connected to said at least one signal terminal (40,42) of the ultrasonic transmitter (12), provided to excite the oscillating element (14) of the ultrasonic transducer (12) for emission of ultrasonic waves for operation as an ultrasonic transmitter during a transmission interval and for subsequent deactivation of the excitation of the oscillating element (14) of the ultrasonic transducer (12) for reception of ultrasonic waves for operation of an ultrasonic receiver during a reception interval and for the processing of signals applied to said at least one signal terminal (40,42) of the ultrasonic transmitter (12), with the oscillating element (14) decaying into a steady state after termination of its excitation during a decay phase beginning with the start of a reception interval, **characterized in**
- **that**, for shortening the decay phase of the oscillating element (14), the controlling and evaluating unit (16) comprises at least one switchable damping resistor (50) adapted to be connected to said at least one signal terminal (40,42) of the ultrasonic transmitter (12), notably under control by the controlling and evaluating unit (16) and upon termination of the transmission interval and/or upon the start of the reception interval,
- **that** the amount of the output signal of the ultrasonic transducer (12) or the amount of an output signal of a measurement amplifier (58) or of a circuit (70) of the controlling and evaluating unit (16) connected downstream of said measuring amplifier (58) is compared to a predeterminable deactivation threshold at the latest from the beginning of the decay phase, and
- **that** the controlling and evaluating unit (16) terminates the connection (50) of the damping resistor to said at least one signal terminal (40,42) of the ultrasonic transmitter (12) if said output signal is smaller than or equal to the deactivation threshold.

10. The ultrasonic measurement system according to claim 9, **characterized in that** the signal terminal (40,42) of the ultrasonic transducer (12) is electrically connected to ground via the damping resistor (50).

11. The ultrasonic measurement system according to claim 9 or 10, **characterized in that**, for further shortening of the decay phase of the oscillating element (14) of the ultrasonic transducer (12), the controlling and evaluating unit (16) generates at least one damping pulse (74,76,78) by which the at least one signal terminal (40,42) of the ultrasonic transducer (12) can be fed during a decay phase, wherein, by means of a phase position detector (80) of the controlling and evaluating unit (16), the phase position of the oscillations of the decay signal of the ultrasonic transducer (12) can be detected during a decay phase and, therefrom, the phase position of the decaying of the oscillating element of the ultrasonic transducer (12) can be estimated, the ultrasonic transducer (12) being controllable by a damping pulse (74,76, 78), particularly a single, double or multiple damping pulse, which is phase-shifted relative to the output signal of the ultrasonic transducer (12).

12. The ultrasonic measurement system according to claim 11, **characterized in that**, after control of the ultrasonic transducer (12) by a single, double or multiple damping pulse (74,76,78), the phase position of the oscillations of the damped decay signal of the ultrasonic transducer (12) can be detected by means of the phase position detector (80) and, therefrom, the phase position of the damped decaying of the oscillating element (14) of the ultrasonic transducer (12) can be estimated, the ultrasonic transducer (12) being controllable by at least one further damping pulse (74,76,78), particularly a single, double or multiple damping pulse, which is phase-shifted relative to the output signal of the ultrasonic transducer (12).

13. The ultrasonic measurement system according to claim 11 or 12, **characterized in that** the height and/or the width of the damping pulses (74,76,78) or of one damping pulse (74,76,78) are variable and particularly can be reduced from damping pulse (74,76,78) to damping pulse (74,76,78).

14. The ultrasonic measurement system according to any one of claims 11 to 13, **characterized in that** the phase position detector (80) comprises a zero-crossing detector.

15. The ultrasonic measurement system according to any one of claims 10 to 14, **characterized in that** at least one decoupling capacitor (60,62) is arranged between the ultrasonic transducer (12) and the measurement amplifier (58), and that the controlling and evaluating unit (16) comprises a voltage limiting unit (44) provided e.g. in the form of two antiparallel-connected voltage limiting elements (46,48) and particularly having p-n junctions, to which, under control by the controlling and evaluating unit (16) and beginning with the start of a reception interval, the at least one signal terminal (40,42) of the ultrasonic transducer (12) and thus, in case of an existing measurement amplifier (58), the input of said amplifier can be connected.

16. The ultrasonic measurement system according to any one of claims 10 to 15, **characterized in that** a measurement amplifier (58) has a gain which is in a controlled manner variable respectively from small to large values, particularly per reception interval and particularly after the deactivation threshold has been underrun by the output signal of the ultrasonic transducer (12) or of a measurement amplifier (58) connected to the ultrasonic transducer (12) or of a circuit (70) connected downstream of the measurement amplifier (58), wherein the gain can be increased in a controlled manner to the effect that the output of the measurement amplifier (58) is not overamplified with the decrease of the output signal of the ultrasonic transducer (12) during a reception interval.

17. The ultrasonic measurement system according to any one of claims 10 to 16, **characterized in that** the controlling and evaluating unit (16) comprises a charge pump (30) for providing the control energy for the ultrasonic transducer (12).

18. The ultrasonic measurement system according to any one of claims 10 to 17, **characterized in that**, for controlling the ultrasonic transducer (12) during a transmission interval, the controlling and evaluating unit (16) comprises a control circuit having two or four switches (20,22, 24,26) connectable to form a half and respectively full bridge.

19. The ultrasonic measurement system according to claim 18, **characterized in that** the damping resistor (50) or the voltage limiting unit (44) is connected to the half and respectively full bridge circuit (18) or is switchable via one of the switches (20,22,24,26) of the half and respectively full bridge circuit (18).

## Revendications

1. Procédé de mesure au moyen d'ultrasons, en particulier comme aide au stationnement pour des véhicules, dans lequel
- un transducteur ultrasonore (12) électroacoustique présentant un élément oscillant (14), qui est utilisé sans convertisseur de tension (54, 56) à son entrée, est commandé pendant la durée d'un intervalle d'émission avec un signal de commande à train d'impulsions en particulier pour la production d'ondes ultrasonores,
- un intervalle de réception suit l'intervalle d'émission avec l'achèvement de la commande du transducteur ultrasonore (12), l'élément oscillant (14) du transducteur ultrasonore (12) s'arrêtant d'osciller pendant une phase d'arrêt d'oscillation commençant avec l'achèvement de l'intervalle d'émission,
- le transducteur ultrasonore (12) est branché sur au moins une résistance d'amortissement (50) au plus tard à partir du début de la phase d'arrêt d'oscillation pour le raccourcissement de celle-ci,
- le branchement du transducteur ultrasonore (12) sur la résistance d'amortissement (50) est terminé quand le signal de sortie du transducteur ultrasonore (12) ou le signal de sortie d'un amplificateur de mesure (58) raccordé au transducteur ultrasonore (12) ou d'un circuit (70) disposé en aval de celui-ci passe au-dessous d'un seuil de désactivation pouvant être spécifié au préalable et
- ensuite, pendant l'intervalle de réception, au moins un écho d'une onde ultrasonore émise dans l'intervalle d'émission précédent ou une autre onde ultrasonore peut être détecté(e),
**caractérisé en ce que**
le branchement de la résistance d'amortissement (50) sur le transducteur ultrasonore (12) n'est effectué qu'avec l'achèvement de l'intervalle d'émission et/ou avec le début de l'intervalle de réception.

2. Procédé selon la revendication 1, **caractérisé en ce que**, pour le raccourcissement supplémentaire de la phase d'arrêt d'oscillation à l'aide du signal de sortie du transducteur ultrasonore (12) et/ou du signal de sortie de l'amplificateur de mesure (58), la position de phase de l'arrêt d'oscillation de l'élément oscillant (14) du transducteur ultrasonore (12) est déterminée ou au moins estimée, et **en ce que** le transducteur ultrasonore (12) est exposé à au moins une impulsion d'amortissement (74, 76, 78), en particulier unique, double ou multiple, déphasée par rapport au signal de sortie du transducteur ultrasonore (12).

3. Procédé selon la revendication 2, **caractérisé en ce que**, après l'exposition du transducteur ultrasonore (12) à une première impulsion d'amortissement (78) en particulier unique, double ou multiple, la position de phase des périodes de l'arrêt d'oscillation amorti de l'élément oscillant (14) du transducteur ultrasonore (12) est d'abord de nouveau déterminée ou au moins estimée, et **en ce que** le transducteur ultrasonore (12) est exposé à une autre impulsion d'amortissement, en particulier unique, double ou multiple, déphasée par rapport au signal de sortie du transducteur ultrasonore (12).

4. Procédé selon la revendication 2 ou 3, **caractérisé en ce que**, lors de l'exposition du transducteur ultrasonore (12) à plusieurs impulsions d'amortissement (74, 76, 78), leur énergie est modifiée, en particulier est réduite, en particulier d'une impulsion d'amortissement (74, 76, 78) à l'autre (74, 76, 78).

5. Procédé selon l'une des revendications 1 à 4, **caractérisé en ce que** le signal acoustique reçu par le transducteur ultrasonore (12) pendant une phase de réception est converti en un signal de mesure électrique qui est acheminé à un amplificateur de mesure (58) en tant que signal d'entrée et est amplifié dans l'amplificateur de mesure (58), et **en ce que** le signal d'entrée de l'amplificateur de mesure (58) est limité à une valeur définissant le point de travail de l'amplificateur de mesure (58).

6. Procédé selon l'une des revendications 1 à 5, **caractérisé en ce qu'**au moins un condensateur de découplage (60, 62) est disposé entre le transducteur ultrasonore (12) et l'amplificateur de mesure (58), et **en ce que**, au moins pendant un intervalle de réception et/ou au moins pendant la durée d'un intervalle de réception, le transducteur ultrasonore (12) et donc l'amplificateur de mesure (58) est branché sur une unité de limitation de tension (44), comme par ex. deux éléments de limitation de tension (46, 48) montés de façon antiparallèle, en particulier avec des jonctions pn.

7. Procédé selon l'une des revendications 1 à 6, **caractérisé en ce que** le facteur d'amplification d'un amplificateur de mesure (58) selon lequel le signal d'entrée est amplifié, en particulier par intervalle de réception et en particulier après le passage au-dessous du seuil de désactivation par le signal de sortie du transducteur ultrasonore (12) ou d'un amplificateur de mesure (58) raccordé au transducteur ultrasonore (12) ou d'un circuit (70) disposé en aval de celui-ci, augmente de façon temporisée pour une amplification la plus faible possible de telle sorte que des échos arrivant encore de plus loin, qui sont de faible énergie en conséquence, sont amplifiés encore suffisamment de sorte qu'aucune saturation ne s'installe à la sortie (68) de l'amplificateur de mesure (58).

8. Procédé selon l'une des revendications 1 à 7, **caractérisé en ce qu'**il est prévu une source d'énergie électrique avec une pompe de charge (30) pour le fonctionnement du transducteur ultrasonore (12) pendant une phase d'émission.

9. Système de mesure à ultrasons, en particulier en tant qu'aide au stationnement pour véhicules, avec
- un transducteur ultrasonore (12) présentant un élément oscillant (14), sans convertisseur de tension, qui peut fonctionner au choix aussi bien en tant qu'émetteur d'ultrasons qu'en tant que récepteur d'ultrasons, et qui présente au moins une borne de signal (40, 42) servant soit d'entrée soit de sortie, et
- avec une unité de commande et d'évaluation (16) raccordée à la borne de signal (40, 42) au moins au nombre de un du transducteur ultrasonore (12) pour l'excitation de l'élément oscillant (14) du transducteur ultrasonore (12) pour l'émission d'ondes ultrasonores pour le fonctionnement en tant qu'émetteur d'ultrasons pendant un intervalle d'émission et pour la désactivation consécutive de l'excitation de l'élément oscillant (14) du transducteur ultrasonore (12) pour la réception d'ondes ultrasonores pour le fonctionnement en tant que récepteur d'ultrasons pendant un intervalle de réception et pour le traitement de signaux présents sur la borne de signal (40, 42) au moins au nombre de un du transducteur ultrasonore (12), l'élément oscillant (14) arrêtant son oscillation après l'achèvement de son excitation pendant une phase d'arrêt d'oscillation à partir du début d'un intervalle de réception,
**caractérisé en ce que**
- pour le raccourcissement de la phase d'arrêt d'oscillation de l'élément oscillant (14), l'unité de commande et d'évaluation (16) présente au moins une résistance d'amortissement (50) commutable qui peut être branchée sur la borne de signal (40, 42) au moins au nombre de un du transducteur ultrasonore (12), et cela sous la commande de l'unité de commande et d'évaluation (16), et avec l'achèvement de l'intervalle d'émission et/ou avec le début de l'intervalle de réception,
- **en ce que** la grandeur du signal de sortie du transducteur ultrasonore (12) ou la grandeur d'un signal de sortie d'un amplificateur de mesure (58) ou d'un circuit (70), disposé en aval de celui-ci, de l'unité de commande et d'évaluation (16) est comparée à un seuil de désactivation pouvant être spécifié au préalable, au moins à partir du début de la plaque optique, et
- **en ce que** l'unité de commande et d'évaluation (16) termine le branchement de la résistance d'amortissement (50) sur la borne de signal (40, 42) au moins au nombre de un du transducteur ultrasonore (12) quand le signal de sortie est inférieur ou égal au seuil de désactivation.

10. Système de mesure à ultrasons selon la revendication 9, **caractérisé en ce que** la borne de signal (40, 42) du transducteur ultrasonore (12) est raccordée électriquement à la masse par le biais de la résistance d'amortissement (50).

11. Système de mesure à ultrasons selon la revendication 9 ou 10, **caractérisé en ce que**, pour le raccourcissement supplémentaire de la phase d'arrêt d'oscillation de l'élément oscillant (14) du transducteur ultrasonore (12),
l'unité de commande et d'évaluation (16) produit au moins une impulsion d'amortissement (74, 76, 78) à laquelle la borne de signal (40, 42) au moins au nombre de un du transducteur ultrasonore (12) peut être exposée pendant une phase d'arrêt d'oscillation,
la position de phase des oscillations du signal d'arrêt d'oscillation du transducteur ultrasonore (12) pouvant être déterminée à l'aide d'un détecteur de position de phase (80) de l'unité de commande et d'évaluation (16) pendant une phase d'arrêt d'oscillation et à l'aide duquel la position de phase de l'arrêt d'oscillation de l'élément oscillant du transducteur ultrasonore (12) peut être estimée,
le transducteur ultrasonore (12) pouvant être commandé avec une impulsion d'amortissement (74, 76, 78) en particulier unique, double ou multiple, déphasée par rapport au signal d'arrêt d'oscillation du transducteur ultrasonore (12).

12. Système de mesure à ultrasons selon la revendication 11, **caractérisé en ce que**, après une commande du transducteur ultrasonore (12) par une impulsion d'amortissement (74, 76, 78) unique, double ou multiple, la position de phase des oscillations du signal d'arrêt d'oscillation amorti du transducteur ultrasonore (12) peut être déterminée au moyen du détecteur de position de phase (80), et à l'aide duquel la position de phase de l'arrêt d'oscillation amorti de l'élément oscillant (14) du transducteur ultrasonore (12) peut être estimée, le transducteur ultrasonore (12) pouvant être commandé par au moins une autre impulsion d'amortissement (74, 76, 78), en particulier unique, double ou multiple, déphasée par rapport au signal d'arrêt d'oscillation du transducteur ultrasonore (12).

13. Système de mesure à ultrasons selon la revendication 11 ou 12, **caractérisé en ce que** la hauteur et/ou la largeur des impulsions d'amortissement (74, 76, 78) ou d'une impulsion d'amortissement (74, 76, 78) peut être modifiée, et en particulier peut être réduite et en particulier d'une d'impulsion d'amortissement (74, 76, 78) à l'autre (74, 76, 78).

14. Système de mesure à ultrasons selon l'une des revendications 11 à 13, **caractérisé en ce que** le détecteur de position de phase (80) présente un détecteur de passage par zéro.

15. Système de mesure à ultrasons selon l'une des revendications 10 à 14, **caractérisé en ce qu'**au moins un condensateur de découplage (60, 62) est disposé entre le transducteur ultrasonore (12) et un amplificateur de mesure (58), et **en ce que** l'unité de commande et d'évaluation (16) présente une unité de limitation de tension (44), comme par ex. deux éléments de limitation de tension (46, 48) montés de façon antiparallèle, en particulier avec des jonctions pn, avec laquelle, sous la commande de l'unité de commande et d'évaluation (16), à partir du début d'un intervalle de réception, la borne de signal (40, 42) au moins au nombre de un du transducteur ultrasonore (12), et donc son entrée quand l'amplificateur de mesure (58) est présent, peut être branchée.

16. Système de mesure à ultrasons selon l'une des revendications 10 à 15, **caractérisé en ce qu'**un amplificateur de mesure (58) présente un facteur d'amplification modifiable respectivement à partir de valeurs faibles vers des valeurs élevées, modifiable de façon commandée, en particulier par intervalle de réception et en particulier après le passage sous le seuil de désactivation par le signal de sortie du transducteur ultrasonore (12) ou d'un amplificateur de mesure (58) raccordé au transducteur ultrasonore ou d'un circuit (70) disposé en aval de celui-ci, le facteur d'amplification pouvant être augmenté de façon commandée de telle sorte que la sortie de l'amplificateur de mesure (58) n'est pas saturée avec le signal de sortie du transducteur ultrasonore (12) qui diminue pendant un intervalle de réception.

17. Système de mesure à ultrasons selon l'une des revendications 10 à 16, **caractérisé en ce que** l'unité de commande et d'évaluation (16) présente une pompe de charge (30) destinée à fournir l'énergie de commande pour le transducteur ultrasonore (12).

18. Système de mesure à ultrasons selon l'une des revendications 10 à 17, **caractérisé en ce que**, pour la commande du transducteur ultrasonore (12) pendant un intervalle d'émission, l'unité de commande et d'évaluation (16) présente un circuit de commande avec deux ou quatre commutateurs commutables (20, 22, 24, 26) interconnectés en un demi-pont ou respectivement en un pont intégral.

19. Système de mesure à ultrasons selon la revendication 18, **caractérisé en ce que** la résistance d'amortissement (50) ou l'unité de limitation de tension (44) est raccordée au montage en demi-pont ou respectivement en pont intégral (18) et peut être commutée par le biais de l'un des commutateurs commutables (20, 22, 24, 26) du montage en demi-pont ou en pont intégral (18).
